(19) Europäisches Patentamt
European Patent Office
Office européen des brevets

(11) **EP 2 393 253 A1**

(12) **EUROPEAN PATENT APPLICATION**
published in accordance with Art. 153(4) EPC

(43) Date of publication:
**07.12.2011 Bulletin 2011/49**

(51) Int Cl.:
***H04L 27/26*** (2006.01)   ***H04B 7/26*** (2006.01)
***H04J 1/00*** (2006.01)

(21) Application number: **09837376.4**

(22) Date of filing: **30.12.2009**

(86) International application number:
**PCT/CN2009/076238**

(87) International publication number:
**WO 2010/078819 (15.07.2010 Gazette 2010/28)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **07.01.2009 CN 200910076558**

(71) Applicant: **Timi Technologies Co., Ltd.
Beijing 100097 (CN)**

(72) Inventors:
• **GE, Qihong
Beijing 100097 (CN)**
• **WANG, Junwei
Beijing 100097 (CN)**

• **LIU, Binbin
Beijing 100097 (CN)**
• **BAI, Dong
Beijing 100097 (CN)**
• **TAO, Tao
Beijing 100097 (CN)**

(74) Representative: **Davies, Philip
Haseltine Lake LLP
Redcliff Quay
120 Redcliff Street
Bristol
BS1 6HU (GB)**

(54) **METHOD AND DEVICE OF CHANNEL ESTIMATION FOR OFDM SYSTEM**

(57) The present invention relates to the field of communication technology. A channel estimation device for an Orthogonal Frequency Division Multiplexing (OFDM) system is provided for performing channel estimation on data based on synchronization signal and pilot, which comprises: a synchronization signal based initial channel estimation module for performing initial channel estimation based on a synchronization signal in the data; a pilot channel tracking module for performing pilot channel tracking on the result of the initial channel estimation; a noise reduction module for performing noise reduction on the result of the pilot channel tracking; and an effective sub-carrier extraction module for extracting channel estimation values of effective sub-carriers from the result of the noise reduction. With the channel estimation method and device for OFDM system according to the present invention, the channel estimation is carried out jointly based on the synchronization signal and the pilot, such that the accuracy of channel estimation can be significantly improved and the performance requirements of the system can be satisfied without increasing the density of pilots and thus reducing the amount of system payload. Moreover, the synchronization signal can still be used for its original purpose of carrier and timing synchronization.

FIG. 8

**Description**

**FIELD OF THE INVENTION**

The invention relates to the field of communication technology, and more particularly, to an Orthogonal Frequency Division Multiplexing (OFDM)-based multi-carrier digital broadcast system as well as a method and device of channel estimation for an OFDM system.

**BACKGROUND OF THE INVENTION**

In an OFDM-based broadcast system, channel estimation is typically carried out using pilots. High density of pilots leads to high accuracy of channel estimation, which leads to increased immunity against multi-path delay spread. However, the more energy the pilots occupy, the less payload the system may carry, which results in lower system utilization. On the other hand, low density of pilots leads to more system payload and higher system utilization which, however, comes at expense of decreased immunity against multi-path delay spread. In some extreme reception condition, e.g., in a coverage overlapping area between single frequency networks, the performance requirements of the system cannot be satisfied by channel estimation based only on pilots.

Synchronization signal is usually used in the OFDM-based broadcast system for carrier and timing synchronization. There is no solution or approach in the prior art for applying the synchronization signal to channel estimation.

**SUMMARY OF THE INVENTION**

An object of the present invention is to solve the problem in the prior art that the performance requirements of the system cannot be satisfied by channel estimation based only on pilots while there is no solution for applying synchronization signal to channel estimation to fulfill the performance requirements of the system.

In order to achieve the above object, an aspect of the present invention is directed to a channel estimation device for an OFDM system, configured for performing channel estimation on data based on synchronization signal and pilot, comprising:

- a synchronization signal based initial channel estimation module adapted for performing initial channel estimation based on a synchronization signal in the data to obtain an initial channel estimation result;
- a pilot channel tracking module adapted for performing pilot channel tracking on the initial channel estimation result obtained from the synchronization signal based initial channel estimation module based on a pilot in the data, so as to obtain a pilot channel tracking result;
- a noise reduction module adapted for performing noise reduction on the pilot channel tracking result obtained from the pilot channel tracking module; and
- an effective sub-carrier extraction module adapted for extracting channel estimation values of effective sub-carriers from the noise reduced pilot channel tracking result.

In the above channel estimation device, the synchronization signal based initial channel estimation module further comprises:

- a sampling sub-module adapted for sampling a frame synchronization sequence of the data to obtain sampled data;
- a time/frequency domain transform sub-module adapted for performing time/frequency domain transform on the sampled data obtained from the sampling sub-module to obtain transformed domain data;
- a de-randomization sub-module adapted for de-randomizing the transformed data obtained from the time/frequency domain transform sub-module to obtain de-randomized data;
- an initial IFFT sub-module adapted for performing IFFT operation on the de-randomized data obtained from the de-randomization sub-module to obtain initial IFFT data;
- an initial filtering sub-module adapted for performing noise reduction on the initial IFFT data obtained from the initial IFFT sub-module to obtain an initial noise reduction result;
- a zero padding sub-module adapted for zero padding the initial noise reduction result obtained from the initial filtering sub-module to obtain a zero padded result; and
- an initial FFT sub-module adapted for performing FFT operation on the zero padded result obtained from the zero padding sub-module to obtain the initial channel estimation result.

In the above channel estimation device, the noise reduction module further comprises:

- a noise reduction IFFT sub-module adapted for performing IFFT operation on the pilot channel tracking result obtained from the pilot channel tracking module to obtain noise reduced IFFT data;
- a noise reduction filtering sub-module adapted for performing noise reduction filtering on the noise reduced IFFT data obtained from the noise reduction IFFT filtering sub-module to obtain a noise reduction filtered result; and
- a noise reduction FFT sub-module adapted for performing FFT operation on the noise reduction filtered result obtained from the noise reduction filtering sub-module to obtain a noise reduction result.

In order to better achieve the above object, a channel estimation method for an OFDM) system is provided for performing channel estimation on data based on synchronization signal and pilot, which comprises the steps of:

- performing initial channel estimation based on a synchronization signal in the data to obtain an initial channel estimation result;
- performing pilot channel tracking on the initial channel estimation result based on a pilot in the data, so as to obtain a pilot channel tracking result;
- performing noise reduction on the pilot channel tracking result to obtain a noise reduction result; and
- extracting channel estimation values of effective sub-carriers from the noise reduction result.

In the above channel estimation method, the step of performing initial channel estimation based on a synchronization signal in the data to obtain an initial channel estimation result comprises:

- sampling a frame synchronization sequence of the data to obtain sampled data;
- performing time/frequency domain transform on the sampled data to obtain transformed domain data;
- de-randomizing the transformed data to obtain de-randomized data;
- performing IFFT operation on the de-randomized data to obtain initial IFFT data;
- performing noise reduction on the initial IFFT data to obtain an initial noise reduction result;
- zero padding the initial noise reduction result to obtain a zero padded result; and
- performing FFT operation on the zero padded result to obtain the initial channel estimation result.

In the above channel estimation method, the step of performing noise reduction on the pilot channel tracking result to obtain a noise reduction result comprises:

- performing IFFT operation on the pilot channel tracking result to obtain noise reduced IFFT data;
- performing noise reduction filtering on the noise reduced IFFT data to obtain a noise reduction filtered result; and
- performing FFT operation on the noise reduction filtered result to obtain the noise reduction result.

In order to better achieve the above object, an OFDM-based multi-carrier digital broadcast system is provided, which comprises a transmitting device and a receiving device, wherein the system further comprises a channel estimation device adapted for performing channel estimation on data received by the receiving device based on synchronization signal and pilot.

In the above multi-carrier digital broadcast system, the channel estimation device further comprises:

- a synchronization signal based initial channel estimation module adapted for performing initial channel estimation based on a synchronization signal in the data to obtain an initial channel estimation result;
- a pilot channel tracking module adapted for performing pilot channel tracking on the initial channel estimation result obtained from the synchronization signal based initial channel estimation module based on a pilot in the data, so as to obtain a pilot channel tracking result;
- a noise reduction module adapted for performing noise reduction on the pilot channel tracking result obtained from the pilot channel tracking module; and
- an effective sub-carrier extraction module adapted for extracting channel estimation values of effective sub-carriers from the noise reduced pilot channel tracking result.

In the above channel estimation device, the synchronization signal based initial channel estimation module further comprises:

- a sampling sub-module adapted for sampling a frame synchronization sequence of the data to obtain sampled data;
- a time/frequency domain transform sub-module adapted for performing time/frequency domain transform on the sampled data obtained from the sampling sub-module to obtain transformed domain data;
- a de-randomization sub-module adapted for de-randomizing the transformed data obtained from the time/frequency domain transform sub-module to obtain de-randomized data;

- an initial IFFT sub-module adapted for performing IFFT operation on the de-randomized data obtained from the de-randomization sub-module to obtain initial IFFT data;
- an initial filtering sub-module adapted for performing noise reduction on the initial IFFT data obtained from the initial IFFT sub-module to obtain an initial noise reduction result;
- a zero padding sub-module adapted for zero padding the initial noise reduction result obtained from the initial filtering sub-module to obtain a zero padded result; and
- an initial FFT sub-module adapted for performing FFT operation on the zero padded result obtained from the zero padding sub-module to obtain the initial channel estimation result.

In the above channel estimation device, the noise reduction module further comprises:

- a noise reduction IFFT sub-module adapted for performing IFFT operation on the pilot channel tracking result obtained from the pilot channel tracking module to obtain noise reduced IFFT data;
- a noise reduction filtering sub-module adapted for performing noise reduction filtering on the noise reduced IFFT data obtained from the noise reduction IFFT filtering sub-module to obtain a noise reduction filtered result; and
- a noise reduction FFT sub-module adapted for performing FFT operation on the noise reduction filtered result obtained from the noise reduction filtering sub-module to obtain a noise reduction result.

With the channel estimation method and device for OFDM system according to the present invention, the channel estimation is carried out jointly based on the synchronization signal and the pilot, such that the accuracy of channel estimation can be significantly improved and the performance requirements of the system can be satisfied without increasing the density of pilots and reducing the amount of system payload. Moreover, the synchronization signal can still be used for its original purpose of carrier and timing synchronization, such that the original function of the synchronization is not affected.

Further aspects and advantages of the present invention will be given in the following description. They will become apparent from either the following description or the implementation of the present invention.

**BRIEF DESCRIPTION OF THE DRAWINGS**

The above and/or further aspects and advantages will be more apparent from the following description of embodiments with reference to the figures, in which:

Fig. 1 is a diagram showing the time domain frame structure of an OFDM system signal having a synchronization signal according to the prior art;
Fig. 2 is a diagram showing the structure in which pilots and data are multiplexed in time/frequency domain according to the prior art;
Fig. 3 is a diagram showing the structure of the satellite broadcast system according to an embodiment of the present invention;
Fig. 4 is a diagram showing the frame structure at the transmitter according to an embodiment of the present invention;
Fig. 5 is a diagram showing the structure of a synchronization signal generator in a signal generator at the transmitter according to an embodiment of the present invention;
Fig. 6 is a schematic diagram illustrating the initial state of a shift register of a complex m-sequence generator in the signal generator shown in Fig. 5;
Fig. 7 is a diagram showing the structure of a channel estimation device according to an embodiment of the present invention;
Fig. 8 is a flowchart illustrating the channel estimation method according to an embodiment of the present invention;
Fig. 9 is a flowchart illustrating the synchronization signal based initial channel estimation process according to an embodiment of the present invention; and
Fig. 10 is a flowchart illustrating the noise reduction process according to an embodiment of the present invention.

**DETAILED DESCRIPTION OF PREFERRED EMBODIMENTS**

The embodiments of the present invention will be detailed in the following. The exemplary embodiments are illustrated in the figures, throughout which same or similar reference numerals refer to same or similar elements or to elements having same or similar functions. The following embodiments described with reference to the figures are exemplary only for explaining, rather than limiting, the present invention.

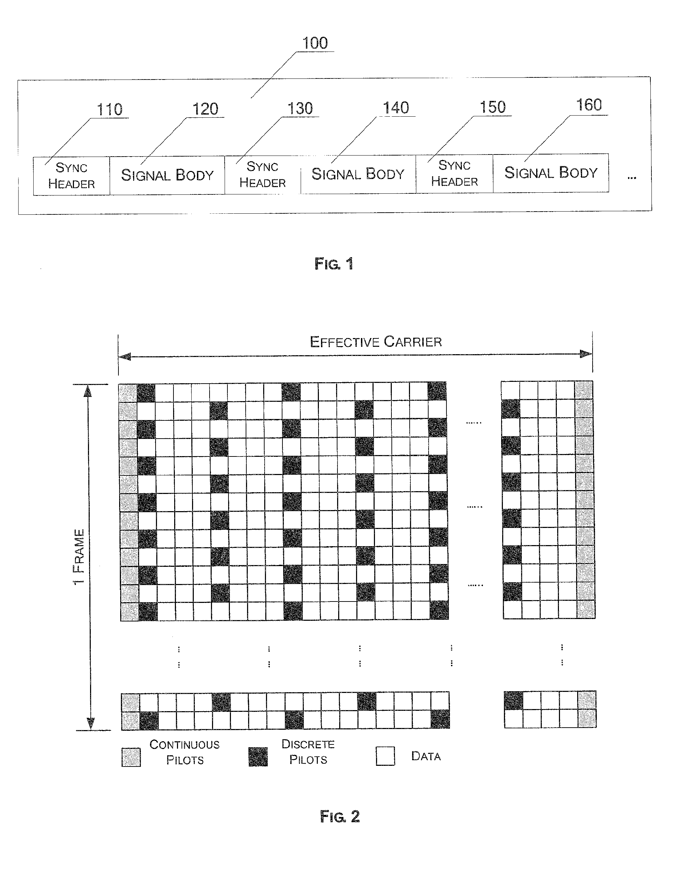

The main concept of the present invention is applicable to an OFDM system having synchronization signals and pilots. Fig. 1 shows the time domain frame structure of a signal in the system. As shown, a signal frame 100 comprises synchronization headers 110, 130, 150 ..., and signal bodies 120, 140, 160 ... Fig. 2 shows the structure in which pilots and data contained in the signal bodies 120, 140, 160 ... are multiplexed in time/frequency domain.

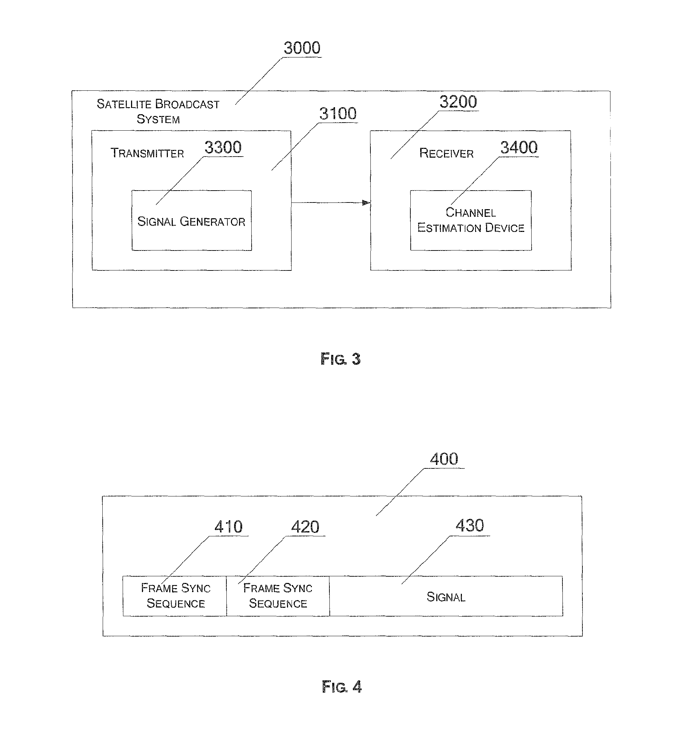

The following description will be given taking a satellite broadcast system 3000 having a sampling rate of 10MHz and a signal bandwidth of 7.52MHz as an example. As shown in Fig. 3, the satellite broadcast system 3000 comprises a transmitter 3100 and a receiver 3200. The transmitter 3100 comprises a signal generator 3300 for generating a band-limited random signal. The receiver 3200 comprises a channel estimation device 3400 for performing channel estimation on data based on synchronization signal and pilot. At the transmitter 3100, each frame has duration of 25ms, containing 250,000 sample points, and has a frame synchronization header of 4096 points composed of two identical frame synchronization sequences each containing 2048 points. As shown in Fig. 4, a frame 400 contains a frame synchronization sequence 410, a frame synchronization sequence 420 and a signal 430. The frame synchronization sequence 410 and the frame synchronization sequence 420 are identical frame synchronization sequences each containing 2048 points.

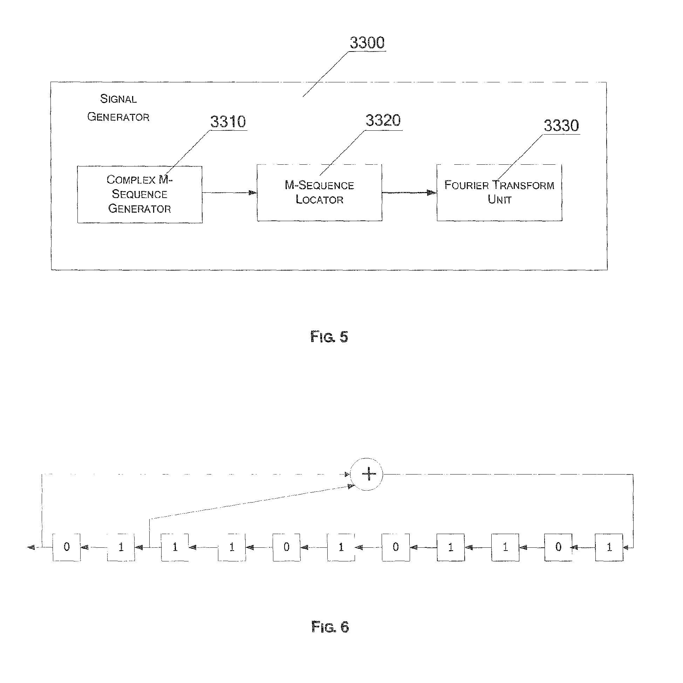

Each of the frame synchronization sequences 410 and 420 is a band-limited random sequence which has a signal bandwidth of 7.52M and no DC components and is generated based on a truncated m-sequence and inverse Fourier transform. As shown in Fig. 5, the band-limited random signal generator 3300 comprises a complex m-sequence generator 3310, an m-sequence locator 3320 and an inverse Fourier transform unit 3330. The complex m-sequence generator 3310 uses a shift register having a generator polynomial of $x^{10}+x^9+1$ to generate an m-sequence M(k), $0 \leq k \leq 2046$. As shown in Fig. 6, the initial state of the shift register is 011 1010 1101. Then, the m-sequence is mapped into a complex symbol according to equation (1):

$$L(k) = \begin{cases} 1+0j, & M(k)=0 \\ -1+0j, & M(k)=1 \end{cases} \qquad (1)$$

The m-sequence locator locates the m-sequence to a suitable location in the frequency domain prior to domain transform according to the requirement that the sequence shall have a signal bandwidth of 7.52M and no DC components. The resulting sequence is expressed in equation (2):

$$P(k) = \begin{cases} 0, & k=0 \\ L(k-1), & 1 \leq k \leq 769 \\ 0, & 770 \leq k \leq 1278 \\ L(k-510), & 1279 \leq k \leq 2047 \end{cases} \qquad (2)$$

The inverse Fourier transform unit 430 transforms equation (2) into the time domain by means of inverse Fourier transform, as shown in equation (3):

$$l(n) = IFFT[P(k)] = \frac{\sqrt{2}}{64} \sum_{k=0}^{2047} P(k) \cdot e^{j2\pi nk/2048}, \quad 0 \leq n \leq 2047 \qquad (3)$$

Then, the signal frame is formed in accordance with the structure shown in Fig. 4.

The time domain signal 330 of the satellite broadcast system can be divided into 53 OFDM symbols, each of which employs a 4096-point Inverse Fast Fourier Transform (IFFT) and has 3076 effective sub-carriers. In each OFDM symbol, sub-carriers 0 and 1539-2557 are virtual sub-carriers, whereas sub-carriers 1-1538 and 2558-4095 are effective sub-carriers. Each OFDM symbol contains 384 discrete pilots, 82 continuous pilots and 2610 payload sub-carriers. Each discrete pilot transmits a known symbol of $1+0j$. The value of the effective sub-carrier number, m, corresponding to each discrete pilot of the n-th OFDM symbol in each frame can be determined according to the rule as shown in equation (4):

$$if \; \mathrm{mod}(n,2) == 0$$

$$m = \begin{cases} 8p+1, & p = 0,1,2,\cdots,191 \\ 8p+3, & p = 192,193,194,\cdots,383 \end{cases}$$

$$if \; \mathrm{mod}(n,2) == 1$$

$$m = \begin{cases} 8p+5, & p = 0,1,2,\cdots,191 \\ 8p+7, & p = 192,193,194,\cdots,383 \end{cases} \tag{4}$$

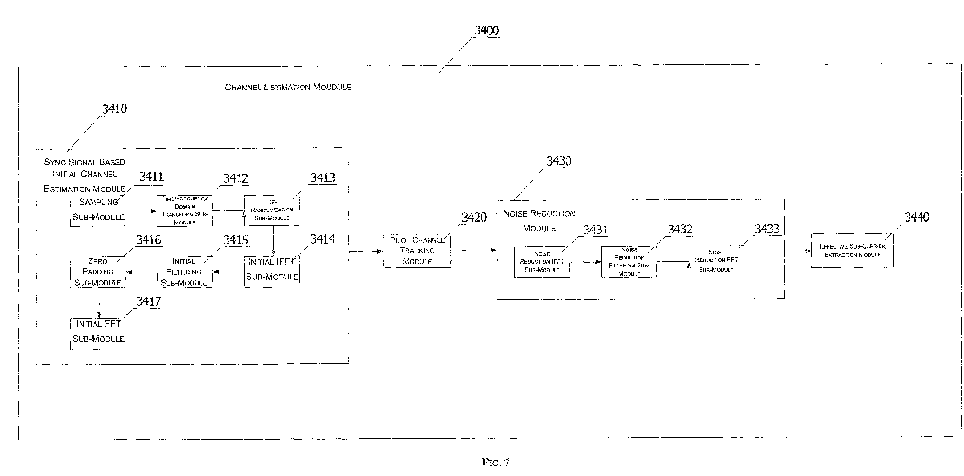

The continuous pilots can be located at the sub-carriers numbered 0, 22, 78, 92, 168, 174, 244, 274, 278, 344, 382, 424, 426, 496, 500, 564, 608, 650, 688, 712, 740, 772, 846, 848, 932, 942, 950, 980, 1012, 1066, 1126, 1158, 1214, 1244, 1276, 1280, 1326, 1378, 1408, 1508, 1537, 1538, 1566, 1666, 1736, 1748, 1794, 1798, 1830, 1860, 1916, 1948, 2008, 2062, 2094, 2124, 2132, 2142, 2226, 2228, 2302, 2334, 2362, 2386, 2424, 2466, 2510, 2574, 2578, 2648, 2650, 2692, 2730, 2796, 2800, 2830, 2900, 2906, 2982, 2996, 3052 and 3075, respectively. Fig. 2 shows the structure in which the discrete pilots, the continuous pilots and the payloads are multiplexed in the time/frequency domain.
As shown in Fig. 7, the channel estimation device 3400 in the receiver 3200 comprises:

a synchronization signal based initial channel estimation module 3410 for performing initial channel estimation based on a synchronization signal in the data; a pilot channel tracking module 3420 for performing pilot channel tracking on the result of the initial channel estimation based on a pilot in the data; a noise reduction module 3430 for performing noise reduction on the result of the pilot channel tracking; and an effective sub-carrier extraction module 3440 for extracting channel estimation values of effective sub-carriers from the result of the noise reduction. The synchronization signal based initial channel estimation module 3410 comprises: a sampling sub-module 3411 for sampling a frame synchronization sequence; a time/frequency domain transform sub-module 3412 for performing time/frequency domain transform; a de-randomization sub-module 3413 for de-randomization;an initial IFFT sub-module 3414 for performing IFFT operation; an initial filtering sub-module 3415 for performing noise reduction; a zero padding sub-module 3416 for zero padding; and an initial FFT sub-module 3417 for performing Fast Fourier Transform (FFT) operation. The noise reduction module 3430 comprises: a noise reduction IFFT sub-module 3431 for performing IFFT operation; a noise reduction filtering sub-module 3432 for performing noise reduction filtering; and a noise reduction FFT sub-module 3433 for performing FFT operation.

Herein, the sampling sub-module 3411 acquires, from the starting location of the frame synchronization sequence of the data, 2048 sample points denoted by $b(n)$ , at a sampling rate of 10MHz. The time/frequency domain transform sub-module 3412 transforms $b(n)$ into $B(k)$ according to equation (5):

$$B(k) = FFT\big[b(n)\big] = \frac{\sqrt{2}}{64}\sum\nolimits_{n=0}^{2047} b(n)\cdot e^{-j2\pi nk/2048}, \quad 0 \le k \le 2047 \tag{5}$$

The de-randomization sub-module 3413 performs frequency domain sequence de-randomization on $B(k)$ using a sequence-located random sequence $P(k)$ which is the same as that of the transmitter to obtain $R(k)$ according to equation (6):

$$R(k) = B(k)\cdot P(k), \quad 0 \le k \le 2047 \tag{6}$$

The initial IFFT sub-module 3414 performs IFFT operation on $R(k)$ to obtain a channel impulse response $r(n)$ with noise according to equation (7):

$$r(n) = IFFT\left[R(k)\right] = \frac{\sqrt{2}}{64}\sum\nolimits_{k=0}^{2047} R(k) \cdot e^{j2\pi nk/2048}, \quad 0 \le n \le 2047 \qquad (7)$$

The initial filtering sub-module 3415 calculates the power of $r(n)$ according to equation (8):

$$P_{aveg} = \frac{1}{2048}\sum\nolimits_{k=0}^{2047}\left|r(n)\right|^2 \qquad (8)$$

and performs noise reduction on $r(n)$ to obtain a noise reduced channel impulse response $s(n)$ according to equation (9):

$$s(n) = \begin{cases} r(n), & \left|r(n)\right|^2 \ge 2P_{aveg} \\ 0, & \left|r(n)\right|^2 < 2P_{aveg} \end{cases} \qquad (9)$$

The zero padding sub-module 3416 zero pads $s(n)$ based on the fact that the synchronization signal has 2048 sub-carriers and the time domain signal has 4096 sub-carriers to obtain equation (10):

$$t(n) = \begin{cases} s(n), & 0 \le n \le 1023 \\ 0, & 1024 \le n \le 3071 \\ s(n\text{-}2048), & 3072 \le n \le 4095 \end{cases} \qquad (10)$$

The initial FFT sub-module 3417 performs FFT operation on the result of zero padding to obtain the synchronization signal based initial channel estimation $H_0(k)$ according to equation (11):

$$H_0(k) = \sqrt{2}FFT\left[t(n)\right] = \frac{\sqrt{2}}{64}\sum\nolimits_{n=0}^{4095} t(n) \cdot e^{-j2\pi nk/4096}, \quad 0 \le k \le 4095 \qquad (11)$$

The pilot channel tracking module 3420 performs pilot channel tracking process according to equation (12):

$$H_i(k) = \begin{cases} H_{i-1}(k), & \text{if k is not a discrete pilot point} \\ Q_i(k), & \text{if k is a discrete pilot point} \end{cases} \qquad (12)$$

where $Q_i(k)$ is the frequency domain signal received at the discrete pilot point in the i-th ($1 \le i \le 53$) OFDM symbol and $H_i(k)$ is the channel estimation value after pilot channel tracking on the i-th OFDM symbol.
The noise reduction IFFT sub-module 3431 performs IFFT operation on the result $H_i(k)$ of the pilot channel tracking to obtain a noisy channel impulse response $h_i(n)$ according to equation (13):

$$h_i(n) = IFFT\left[H_i(k)\right] = \frac{1}{64}\sum\nolimits_{k=0}^{4095} H_i(k) \cdot e^{j2\pi nk/4096}, \quad 0 \le n \le 4095 \qquad (13)$$

The noise reduction filtering sub-module 3432 calculates the average power of $h_i(n)$ according to equation (14):

$$P_{aveg,i} = \frac{1}{4096} \sum_{k=0}^{4095} \left| h_i(n) \right|^2 \tag{14}$$

and performs noise reduction on $h_i(n)$ to obtain a noise reduced channel impulse response $\tilde{h}_i(n)$ according to equation (15):

$$\tilde{h}_i(n) = \begin{cases} h_i(n), & \left| h_i(n) \right|^2 \geq 2P_{aveg,i} \\ 0, & \left| h_i(n) \right|^2 < 2P_{aveg,i} \end{cases} \tag{15}$$

The noise reduction FFT sub-module 3433 performs FFT operation on $\tilde{h}_i(n)$ to obtain a noise reduced channel estimation value $\tilde{H}_i(k)$ according to equation (16):

$$\tilde{H}_i(k) = FFT\left[ \tilde{h}_i(n) \right] = \frac{1}{64} \sum_{n=0}^{4095} \tilde{h}_i(n) \cdot e^{-j2\pi nk/4096}, \quad 0 \leq k \leq 4095 \tag{16}$$

The effective sub-carrier extraction module 3440 extracts from the noise reduced channel estimation value $\tilde{H}_i(k)$ the channel estimation values of the effective sub-carriers according to equation (17):

$$\dot{H}_i(k) = \begin{cases} \tilde{H}_i(k+1), & 0 \leq k \leq 1537 \\ \tilde{H}_i(k+1020), & 1538 \leq k \leq 3075 \end{cases} \tag{17}$$

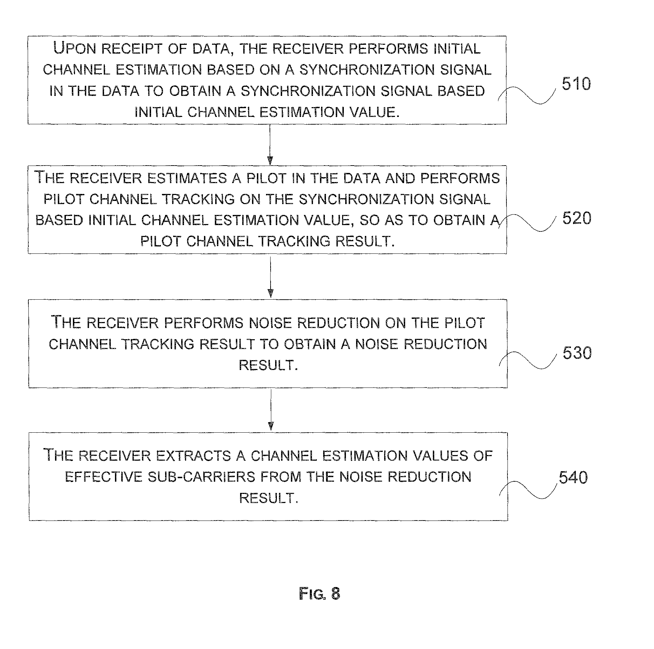

Fig. 8 is a flowchart illustrating the channel estimation method according to an embodiment of the present invention. As shown, the method comprises the following steps.

At step S51 0, upon receipt of data, the receiver performs initial channel estimation based on a synchronization signal in the data to obtain a synchronization signal based initial channel estimation value.

At step S520, the receiver estimates a pilot in the data and performs pilot channel tracking on the synchronization signal based initial channel estimation value, so as to obtain a pilot channel tracking result.

At step S530, the receiver performs noise reduction on the pilot channel tracking result to obtain a noise reduction result.

At step S540, the receiver extracts channel estimation values of effective sub-carriers from the noise reduction result.

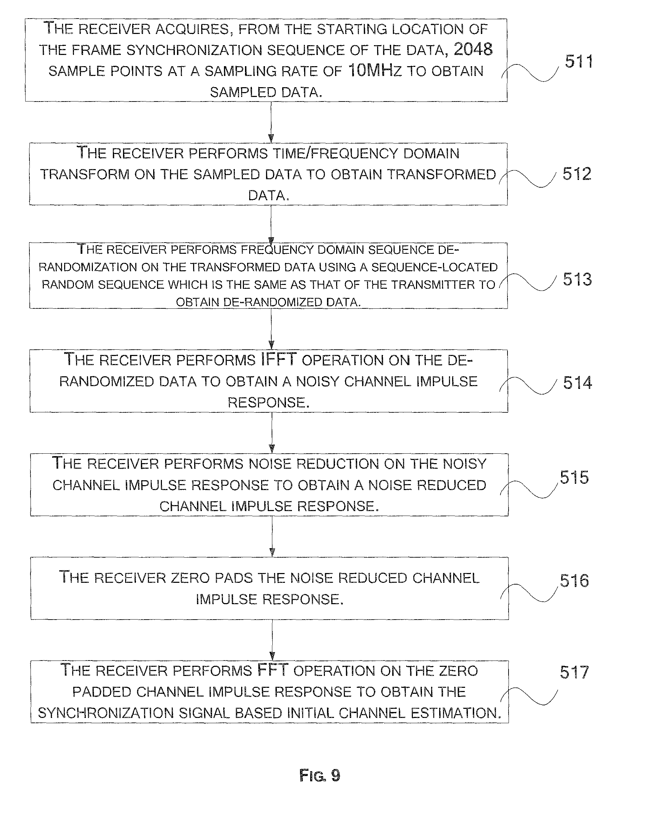

Fig. 9 shows a flowchart further illustrating the step S51 0 in which the initial channel estimation is carried out based on the synchronization signal in the data. As shown, the step S51 0 further comprises the following steps.

At step S511, the receiver acquires, from the starting location of the frame synchronization sequence of the data, 2048 sample points at a sampling rate of 10MHz to obtain sampled data.

At step S512, the receiver performs time/frequency domain transform on the sampled data to obtain transformed data.

At step S513, the receiver performs frequency domain sequence de-randomization on the transformed data using a sequence-located random sequence which is the same as that of the transmitter to obtain de-randomized data.

At step S514, the receiver performs IFFT operation on the de-randomized data to obtain a noisy channel impulse response.

At step S515, the receiver performs noise reduction on the noisy channel impulse response to obtain a noise reduced channel impulse response.

At step S516, the receiver zero pads the noise reduced channel impulse response based on the fact that the synchronization signal has 2048 sub-carriers and the time domain signal has 4096 sub-carriers.

At step S517, the receiver performs FFT operation on the zero padded channel impulse response to obtain the synchronization signal based initial channel estimation.

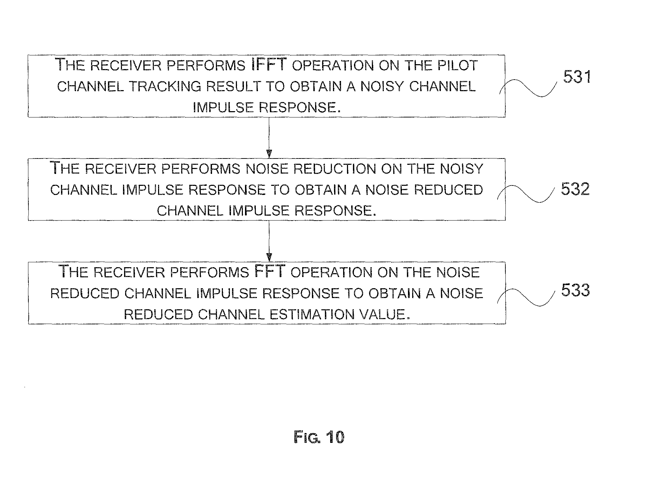

Fig. 10 shows a flowchart further illustrating the step S530 in which the receiver performs noise reduction process on the pilot channel tracking result. As shown, the step S530 further comprises the following steps.

At step S531, the receiver performs IFFT operation on the pilot channel tracking result to obtain a noisy channel impulse response.

At step S532, the receiver performs noise reduction on the noisy channel impulse response to obtain a noise reduced channel impulse response.

At step S533, the receiver performs FFT operation on the noise reduced channel impulse response to obtain a noise reduced channel estimation value.

With the channel estimation method and device for OFDM system according to the present invention, the channel estimation is carried out jointly based on the synchronization signal and the pilot, such that the accuracy of channel estimation can be significantly improved and the performance requirements of the system can be satisfied without increasing the density of pilots and thus reducing the amount of system payload. Moreover, the synchronization signal can still be used for its original purpose of carrier and timing synchronization, such that the original function of the synchronization is not affected.

While the embodiments of the present invention have been shown and described, various changes, modifications, alternatives and variants can be made to the embodiments by those skilled in the art without departing from the principle and spirit of the present invention. The scope of the present invention is only defined by the claims as attached and the equivalents thereof.

**Claims**

1. A channel estimation device for an OFDM system, configured for performing channel estimation on data based on synchronization signal and pilot, comprising:

   - a synchronization signal based initial channel estimation module adapted for performing initial channel estimation based on a synchronization signal in the data to obtain an initial channel estimation result;
   - a pilot channel tracking module adapted for performing pilot channel tracking on the initial channel estimation result obtained from the synchronization signal based initial channel estimation module based on a pilot in the data, so as to obtain a pilot channel tracking result;
   - a noise reduction module adapted for performing noise reduction on the pilot channel tracking result obtained from the pilot channel tracking module; and
   - an effective sub-carrier extraction module adapted for extracting channel estimation values of effective sub-carriers from the noise reduced pilot channel tracking result.

2. The channel estimation device according to claim 1, wherein the synchronization signal based initial channel estimation module further comprises:

   - a sampling sub-module adapted for sampling a frame synchronization sequence of the data to obtain the sampled data;
   - a time/frequency domain transform sub-module adapted for performing time/frequency domain transform on the sampled data obtained from the sampling sub-module to obtain transform domain data;
   - a de-randomization sub-module adapted for de-randomizing the transform data obtained from the time/frequency domain transform sub-module to obtain de-randomized data;
   - an initial IFFT sub-module adapted for performing IFFT operation on the de-randomized data obtained from the de-randomization sub-module to obtain initial IFFT data;
   - an initial filtering sub-module adapted for performing noise reduction on the initial IFFT data obtained from the initial IFFT sub-module to obtain an initial noise reduction result;
   - a zero padding sub-module adapted for zero padding the initial noise reduction result obtained from the initial filtering sub-module to obtain a zero padded result; and
   - an initial FFT sub-module adapted for performing FFT operation on the zero padded result obtained from the zero padding sub-module to obtain the initial channel estimation result.

3. The channel estimation device according to claim 1, wherein the noise reduction module further comprises:

   - a noise reduction IFFT sub-module adapted for performing IFFT operation on the pilot channel tracking result obtained from the pilot channel tracking module to obtain noise reduced IFFT data;

- a noise reduction filtering sub-module adapted for performing noise reduction filtering on the noise reduced IFFT data obtained from the noise reduction IFFT filtering sub-module to obtain a noise reduction filtered result; and
- a noise reduction FFT sub-module adapted for performing FFT operation on the noise reduction filtered result obtained from the noise reduction filtering sub-module to obtain a noise reduction result.

4. A channel estimation method for an OFDM system, for performing channel estimation on data based on synchronization signal and pilot, comprising the steps of:

- performing initial channel estimation based on a synchronization signal in the data to obtain an initial channel estimation result;
- performing pilot channel tracking on the initial channel estimation result based on a pilot in the data, so as to obtain a pilot channel tracking result;
- performing noise reduction on the pilot channel tracking result to obtain a noise reduction result; and
- extracting channel estimation values of effective sub-carriers from the noise reduction result.

5. The channel estimation method according to claim 4, wherein the step of performing initial channel estimation based on a synchronization signal in the data to obtain an initial channel estimation result comprises:

- sampling a frame synchronization sequence of the data to obtain sampled data;
- performing time/frequency domain transform on the sampled data to obtain transform domain data;
- de-randomizing the transform data to obtain de-randomized data;
- performing IFFT operation on the de-randomized data to obtain initial IFFT data;
- performing noise reduction on the initial IFFT data to obtain an initial noise reduction result;
- zero padding the initial noise reduction result to obtain a zero padded result; and
- performing FFT operation on the zero padded result to obtain the initial channel estimation result.

6. The channel estimation method according to claim 4, wherein the step of performing noise reduction on the pilot channel tracking result to obtain a noise reduction result comprises:

- performing IFFT operation on the pilot channel tracking result to obtain noise reduced IFFT data;
- performing noise reduction filtering on the noise reduced IFFT data to obtain a noise reduction filtered result; and
- performing FFT operation on the noise reduction filtered result to obtain the noise reduction result.

7. An OFDM-based multi-carrier digital broadcast system comprising a transmitting device and a receiving device, wherein the system further comprises a channel estimation device adapted for performing channel estimation on data received by the receiving device based on synchronization signal and pilot.

8. The multi-carrier digital broadcast system according to claim 7, wherein the channel estimation device further comprises:

- a synchronization signal based initial channel estimation module adapted for performing initial channel estimation based on a synchronization signal in the data to obtain an initial channel estimation result;
- a pilot channel tracking module adapted for performing pilot channel tracking on the initial channel estimation result obtained from the synchronization signal based initial channel estimation module based on a pilot in the data, so as to obtain a pilot channel tracking result;
- a noise reduction module adapted for performing noise reduction on the pilot channel tracking result obtained from the pilot channel tracking module; and
- an effective sub-carrier extraction module adapted for extracting channel estimation values of effective sub-carriers from the noise reduced pilot channel tracking result.

9. The multi-carrier digital broadcast system according to claim 8, wherein the synchronization signal based initial channel estimation module further comprises:

- a sampling sub-module adapted for sampling a frame synchronization sequence of the data to obtain sampled data;
- a time/frequency domain transform sub-module adapted for performing time/frequency domain transform on the sampled data obtained from the sampling sub-module to obtain transform domain data;

- a de-randomization sub-module adapted for de-randomizing the transform data obtained from the time/frequency domain transform sub-module to obtain de-randomized data;
- an initial IFFT sub-module adapted for performing IFFT operation on the de-randomized data obtained from the de-randomization sub-module to obtain initial IFFT data;
- an initial filtering sub-module adapted for performing noise reduction on the initial IFFT data obtained from the initial IFFT sub-module to obtain an initial noise reduction result;
- a zero padding sub-module adapted for zero padding the initial noise reduction result obtained from the initial filtering sub-module to obtain a zero padded result; and
- an initial FFT sub-module adapted for performing FFT operation on the zero padded result obtained from the zero padding sub-module to obtain the initial channel estimation result.

10. The multi-carrier digital broadcast system according to claim 8, wherein the noise reduction module further comprises:

- a noise reduction IFFT sub-module adapted for performing IFFT operation on the pilot channel tracking result obtained from the pilot channel tracking module to obtain noise reduced IFFT data;
- a noise reduction filtering sub-module adapted for performing noise reduction filtering on the noise reduced IFFT data obtained from the noise reduction IFFT filtering sub-module to obtain a noise reduction filtered result; and
- a noise reduction FFT sub-module adapted for performing FFT operation on the noise reduction filtered result obtained from the noise reduction filtering sub-module to obtain a noise reduction result.

100

110    120    130    140    150    160

| SYNC HEADER | SIGNAL BODY | SYNC HEADER | SIGNAL BODY | SYNC HEADER | SIGNAL BODY | ... |

FIG. 1

EFFECTIVE CARRIER

1 FRAME

CONTINUOUS PILOTS    DISCRETE PILOTS    DATA

FIG. 2

3000

SATELLITE BROADCAST
SYSTEM

3100

3200

TRANSMITTER   3300

RECEIVER   3400

SIGNAL GENERATOR

CHANNEL
ESTIMATION DEVICE

FIG. 3

400

410       420       430

| FRAME SYNC SEQUENCE | FRAME SYNC SEQUENCE | SIGNAL |

FIG. 4

3300

SIGNAL
GENERATOR

3310

COMPLEX M-
SEQUENCE
GENERATOR

3320

M-SEQUENCE
LOCATOR

3330

FOURIER TRANSFORM
UNIT

FIG. 5

| 0 | 1 | 1 | 1 | 0 | 1 | 0 | 1 | 1 | 0 | 1 |

FIG. 6

14

3400

CHANNEL ESTIMATION MODULE

3410 — SYNC SIGNAL BASED INITIAL CHANNEL ESTIMATION MODULE

3411 — SAMPLING SUB-MODULE

3412 — TIME/FREQUENCY DOMAIN TRANSFORM SUB-MODULE

3413 — DE-RANDOMIZATION SUB-MODULE

3414 — INITIAL IFFT SUB-MODULE

3415 — INITIAL FILTERING SUB-MODULE

3416 — ZERO PADDING SUB-MODULE

3417 — INITIAL FFT SUB-MODULE

3420 — PILOT CHANNEL TRACKING MODULE

3430 — NOISE REDUCTION MODULE

3431 — NOISE REDUCTION IFFT SUB-MODULE

3432 — NOISE REDUCTION FILTERING SUB-MODULE

3433 — NOISE REDUCTION FFT SUB-MODULE

3440 — EFFECTIVE SUB-CARRIER EXTRACTION MODULE

FIG. 7

UPON RECEIPT OF DATA, THE RECEIVER PERFORMS INITIAL CHANNEL ESTIMATION BASED ON A SYNCHRONIZATION SIGNAL IN THE DATA TO OBTAIN A SYNCHRONIZATION SIGNAL BASED INITIAL CHANNEL ESTIMATION VALUE. — 510

THE RECEIVER ESTIMATES A PILOT IN THE DATA AND PERFORMS PILOT CHANNEL TRACKING ON THE SYNCHRONIZATION SIGNAL BASED INITIAL CHANNEL ESTIMATION VALUE, SO AS TO OBTAIN A PILOT CHANNEL TRACKING RESULT. — 520

THE RECEIVER PERFORMS NOISE REDUCTION ON THE PILOT CHANNEL TRACKING RESULT TO OBTAIN A NOISE REDUCTION RESULT. — 530

THE RECEIVER EXTRACTS A CHANNEL ESTIMATION VALUES OF EFFECTIVE SUB-CARRIERS FROM THE NOISE REDUCTION RESULT. — 540

FIG. 8

THE RECEIVER ACQUIRES, FROM THE STARTING LOCATION OF THE FRAME SYNCHRONIZATION SEQUENCE OF THE DATA, 2048 SAMPLE POINTS AT A SAMPLING RATE OF 10MHz TO OBTAIN SAMPLED DATA. — 511

THE RECEIVER PERFORMS TIME/FREQUENCY DOMAIN TRANSFORM ON THE SAMPLED DATA TO OBTAIN TRANSFORMED DATA. — 512

THE RECEIVER PERFORMS FREQUENCY DOMAIN SEQUENCE DE-RANDOMIZATION ON THE TRANSFORMED DATA USING A SEQUENCE-LOCATED RANDOM SEQUENCE WHICH IS THE SAME AS THAT OF THE TRANSMITTER TO OBTAIN DE-RANDOMIZED DATA. — 513

THE RECEIVER PERFORMS IFFT OPERATION ON THE DE-RANDOMIZED DATA TO OBTAIN A NOISY CHANNEL IMPULSE RESPONSE. — 514

THE RECEIVER PERFORMS NOISE REDUCTION ON THE NOISY CHANNEL IMPULSE RESPONSE TO OBTAIN A NOISE REDUCED CHANNEL IMPULSE RESPONSE. — 515

THE RECEIVER ZERO PADS THE NOISE REDUCED CHANNEL IMPULSE RESPONSE. — 516

THE RECEIVER PERFORMS FFT OPERATION ON THE ZERO PADDED CHANNEL IMPULSE RESPONSE TO OBTAIN THE SYNCHRONIZATION SIGNAL BASED INITIAL CHANNEL ESTIMATION. — 517

FIG. 9

THE RECEIVER PERFORMS IFFT OPERATION ON THE PILOT CHANNEL TRACKING RESULT TO OBTAIN A NOISY CHANNEL IMPULSE RESPONSE. — 531

THE RECEIVER PERFORMS NOISE REDUCTION ON THE NOISY CHANNEL IMPULSE RESPONSE TO OBTAIN A NOISE REDUCED CHANNEL IMPULSE RESPONSE. — 532

THE RECEIVER PERFORMS FFT OPERATION ON THE NOISE REDUCED CHANNEL IMPULSE RESPONSE TO OBTAIN A NOISE REDUCED CHANNEL ESTIMATION VALUE. — 533

FIG. 10

# INTERNATIONAL SEARCH REPORT

| | International application No. |
|---|---|
| | PCT/CN2009/076238 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC:H04L;H04B;H04Q;H04W

Documentation searched other than minimum documentation to the extent that such documents are included in the fields searched

Electronic data base consulted during the international search (name of data base and, where practicable, search terms used)

CNPAT,CNKI,WPI,EPODOC: PN OFDM channel estimat+ pilot synchronization synch+ frame train+ sequence track+

**C. DOCUMENTS CONSIDERED TO BE RELEVANT**

| Category* | Citation of document, with indication, where appropriate, of the relevant passages | Relevant to claim |
|---|---|---|
| X | CHEN Hui，CHEN Xiaoguang. Channel estimation for time varying channel based on decision directed technique in OFDM mobile systems. Journal on communications. Vol. 27 No.9. Sep. 2006 (09.2006). page 2 paragraph 2 to page 5 paragraph 1 | 1-10 |
| X | CN101075829A (ZTE. CORPORATION)21Nov. 2007（21.11.2007）page 4 paragraph 7 to page 7 paragraph 12 | 1-10 |
| A | CN101166171A(UNIV. ELECTRONIC SCI & TECHNOLOGY)23 Apr. 2008（23.04.2008）see the whole document | 1-10 |
| A | CN1826785A (TDF. CORPORATION)30 Aug. 2006（30.08.2006）see the whole document | 1-10 |
| A | US2006/0291578A1 (Manoneet Singh et al.)28 Dec. 2006（28.12.2006）see the whole document | 1-10 |
| A | WO2008/086204A2 (QUALCOMM INCORPORATED)17 Jul. 2008（17.07.2008）see the whole document | 1-10 |

☐ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22.Feb.2010 (22.02.2010) | **08 Apr. 2010 (08.04.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 | **XING, Xinxin** |
| Facsimile No. 86-10-62019451 | Telephone No. (86-10)62413360 |

Form PCT/ISA /210 (second sheet) (July 2009)

EP 2 393 253 A1

## INTERNATIONAL SEARCH REPORT
### Information on patent family members

International application No.

PCT/CN2009/076238

| Patent Documents referred in the Report | Publication Date | Patent Family | Publication Date |
|---|---|---|---|
| CN101075829A | 21.11.2007 | NONE | |
| CN101166171A | 23.04.2008 | NONE | |
| CN 1826785 A | 30.08.2006 | FR 2857802 A1 | 21.01.2005 |
| | | WO 2005011144 A2 | 03.02.2005 |
| | | EP 1661348 A2 | 31.05.2006 |
| | | US 2007041456 A1 | 22.02.2007 |
| US2006291578A1 | 28.12.2006 | NONE | |
| WO 2008086204 A2 | 17.07.2008 | US 2008165908 A1 | 10.07.2008 |
| | | TW 200845667 A | 16.11.2008 |
| | | KR 20090096550 A | 10.09.2009 |
| | | CN 101578830 A | 11.11.2009 |
| | | EP 2127286 A2 | 02.12.2009 |

Form PCT/ISA /210 (patent family annex) (July 2009)

## INTERNATIONAL SEARCH REPORT

International application No.

PCT/CN2009/076238

**CLASSIFICATION OF SUBJECT MATTER:**

H04L27/26(2006.01)i
H04B7/26(2006.01)i
H04J1/00(2006.01)i

Form PCT/ISA /210 (extra sheet) (July 2009)